Europäisches Patentamt

European Patent Office

Office européen des brevets

(11) Publication number: **0 371 175**
**A1**

## EUROPEAN PATENT APPLICATION

(21) Application number: 88311292.2

(22) Date of filing: 29.11.88

(51) Int. Cl.5: **B29C 49/36, B29C 49/04**

(43) Date of publication of application:
06.06.90 Bulletin 90/23

(84) Designated Contracting States:
AT BE CH DE ES FR GB GR IT LI LU NL SE

(71) Applicant: **CMB PACKAGING (UK) LIMITED**
**Woodside Perry Wood Walk**
**Worcester WR5 1EQ(GB)**

(72) Inventor: **Fairchild, Brian**

**deceased(GB)**
Inventor: **Chapman, Roger Charles**
**33 Hamsey Road**
**Sharpthorne East Sussex RH19 4PA(GB)**

(74) Representative: **Parry, Christopher Stephen et al**
**PAGE, WHITE & FARRER 54 Doughty Street**
**London WC1N 2LS(GB)**

(54) **Rotary blow moulding apparatus and method.**

(57) A rotary blow moulding machine for moulding thermoplastics articles such as packaging containers has a turret (10) which is driven intermittently for rotation about a horizontal axis (14). The turret has eight mould assemblies (22) which move through eight equally spaced dwell positions (A to H) as the turret rotates. The mould assemblies are controlled by cams to open and close, and each has a blow arm (112) which can be moved longitudinally and rotationally by cam action. Each mould assembly in turn moves, when open, to a dwell position (A) immediately below a stationary extrusion head (44) and then closes onto the tubular parison being extruded by the head as the next indexing movement of the turret begins. A knife (46) severs the parison length held in the mould from the parent parison, so that subsequent acceleration of the mould and parison length away from the parent parison opens a gap into which the blow arm may be introduced to blow mould the parison length in known manner.

FIG.1.

## ROTARY BLOW MOULDING APPARATUS AND METHOD

This invention relates to rotary blow moulding apparatus and methods, of the kind which employ a rotary turret which carries a plurality of mould assemblies; the mould assemblies have respective moulds which are effective sequentially, as the turret rotates, to form articles from lengths of a tubular parison as it is being extruded from a die.

Since the introduction of rotary horizontal or vertical axis blow moulding machines for making bottles and the like from tubular lengths or thermoplastics material, there has been constant effort to improve the apparatus. Usually these improvements have involved ways of refining the moulding cycle so as to achieve the shortest moulding times (and thus the greatest throughput), and/or to give the optimum movement between the extrusion die and mould to give separation of the cut length of parison in the mould from the parent parison.

The horizontal axis machines proposed hitherto have had a continuously rotating turret and a fixed extrusion die, and this has required needle blowing to inflate the parison length in each mould, with significant scrap plastic between adjacent moulds. On the other hand, the known vertical axis machines have had indexing turrets; in order to provide parison separation after severance they have either required the die (and thus the whole extrusion system) to be moved vertically away from the moulds or they have required the moulds to be moved vertically away from the die. For the first of these alternatives considerable energy and complication is required to achieve the required movement of the die and extrusion system; moreover, secondary problems of dynamic disturbance to the free hanging parison have occurred, affecting the critical relationship between parison and the mould centre for good distribution of plastic in the blown article. For the latter alternative, on the other hand, the requirement to move the mould assemblies vertically gives rise to considerable mechanical complexity.

Applicants believe that the above disadvantages of the known rotary blow moulding apparatus can be removed or substantially reduced. In accordance with one aspect of the invention a rotary blow moulding apparatus comprises a spatially fixed die and extrusion system arranged to extrude a free hanging parison, in combination with a rotary turret which is arranged for intermittent rotation about a horizontal axis, the turret carrying mould assemblies which are controlled and effective in succession to collect successive portions of the parison, the apparatus having severance means arranged for severing the said successive portions of parison on collection, and the turret being thereafter effective to accelerate the moulds with the parison portions therein away from the parent parison so as to create a gap behind each parison portion, and hold them for their inflation by blow arms introduced into the respective gaps and effective on their trailing ends.

Preferably, the movements of the mould halves and the blow arms are controlled by a cam assembly which oscillates generally in synchronism with the indexing movements of the mould assemblies and the,dwell periods between them, in such a way that relative movement always exists between the cam assembly and the rotary turret.

In accordance with the invention from a further aspect there is provided a method of blow moulding thermoplastics articles, which comprises:-

extruding a free-hanging thermoplastics parison in a vertically downward direction;

intermittently rotating a plurality of moulds in a circular, vertically oriented path about a horizontal axis of rotation, the vertically oriented path lying adjacent to the thermoplastic parison, and movement of the moulds in the path presenting each mould in turn to the parison in a downward direction;

at a time when the mould is accelerating downwardly and the speeds of the parison and mould have become sustantially equal,

closing each so-presented mould onto the parison, and

severing from the parent parison the parison length thereby held in the mould; and

after the mould has accelerated away from the parent parison to create a gap between the parison length and the parent parison,

moving the respective blow arm into the gap and engaging it with the trailing end of the parison length to effect blow moulding.

Other aspects and features of the present invention will be more readily understood from the following description of an embodiment thereof given, by way of example only, with reference to the accompanying drawings, in which:

Fig.1 is a schematic front elevation view of a rotary blow moulding machine embodying the present invention;

Fig.2 is a schematic side elevation of the machine, as seen from the right of Fig.1;

Fig.3 is a schematic front elevation of a mould assembly of the machine;

Fig.4 is a schematic plan view of the mould assembly of Fig.3, taken in section on the line IV - IV; and

Fig.5 shows timing diagrams of various operations of the machine.

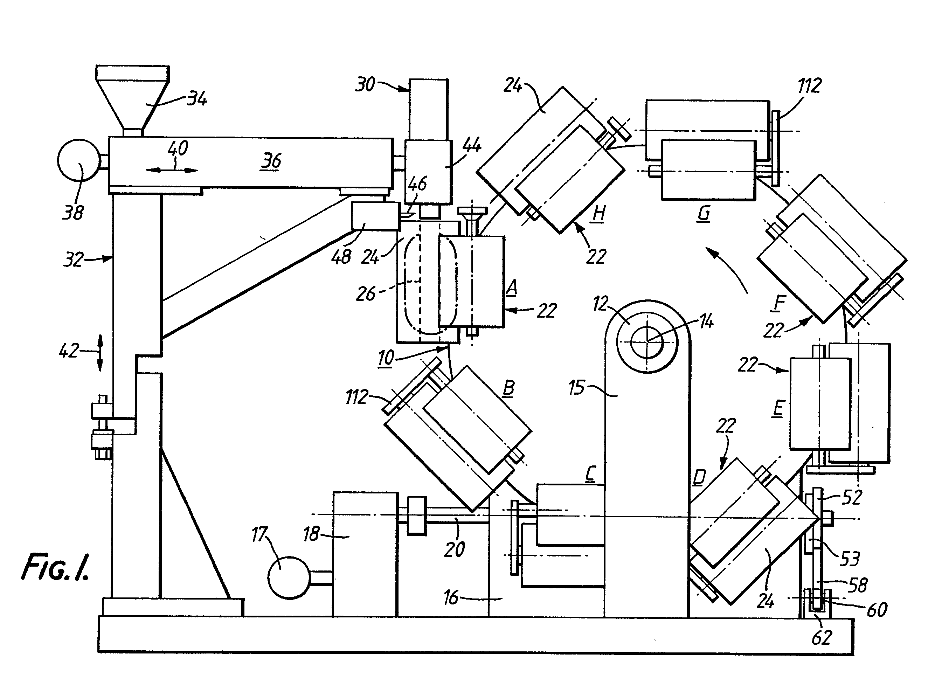

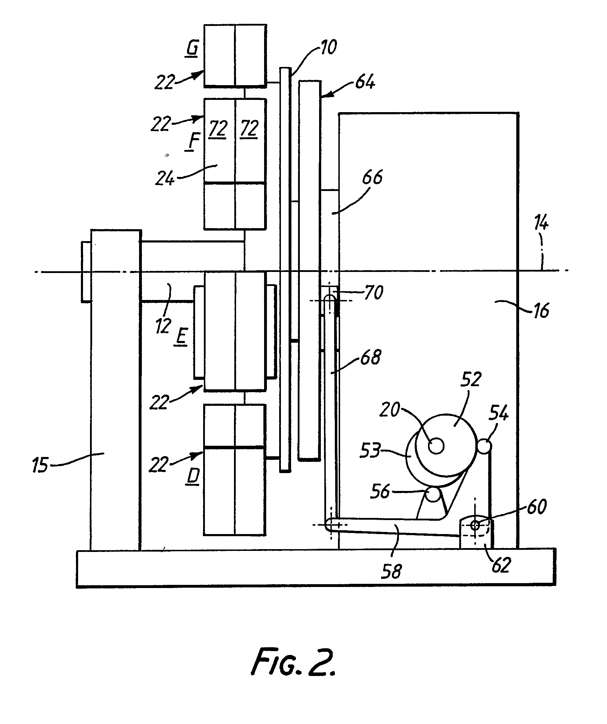

Referring firstly to Figs. 1 and 2, a turret 10 is mounted on a shaft 12 for rotation about a horizontal axis 14. The shaft has support provided by a pedestal 15 at one end; at its other end it is supported by an indexing unit 16 which is arranged to drive it intermittently in an anticlockwise direction (as seen in Fig.1) with equal and regular incremental movements of 45°. The indexing unit 16 is itself driven at a constant (but adjustable) speed by an electric motor 17 (Fig.1) via a gear box 18 and a further shaft 20; it is arranged to produce one incremental movement of the shaft 12 for each rotation of the shaft 20.

Mounted on the turret 10 at an equal spacing and on a common pitch circle diameter are eight identical mould assemblies 22. Each mould assembly has a split mould 24 of the known "book-opening" variety. As will later be more fully described, each mould assembly also includes linkages which are operative to open and close the mould at particular locations in the rotation of the turret 10; for clarity these linkages are omitted from Fig.1.

In Fig.1 the eight dwell or stationary positions of each mould assembly as it moves intermittently with the turret 10 are indicated in sequence by the references A,B,C,D,E,F,G and H respectively. The moulds are moved to their closed conditions as they move away from the first dwell position A; they subsequently move through successive dwell positions B to G whilst still closed, and open when located at the final dwell position H to release the moulded articles for removal by means not shown.

At dwell position A the moulds are vertical, and positioned to close onto a freely hanging, and therefore vertical, tubular parison 26 which is being continuously extruded at a constant (but adjustable) speed by a die assembly 30. The parison may be of any required thermoplastics material, whether monolayer or multilayer. It may include, or be formed of, a polymer blend.

The die assembly 30 is rigidly carried from a support structure 32. In the embodiment shown it is arranged for producing a monolayer parison; it has an associated hopper 34, and a screw extruder 36 with associated drive motor 38. The die assembly 30 is fixed in position in relation to the support structure, but the support structure itself has provision for adjusting its position horizontally and vertically as and when required, as indicated by the arrows 40, 42.

The die head of the die assembly, by means of which the tubular parison is formed, is indicated in Fig.1 by the reference numeral 44. Immediately beneath it there is mounted a horizontally reciprocable knife 46 which is operable to sever the parison as is later to be described; for that purpose the knife is connected to the output member of an actuator 48.

The turret 10 can be seen in Fig.2 with four of the mould assemblies 22 located in the dwell positions D,E,F and G. Also to be seen in that Figure are the shaft 12 with its horizontal axis of rotation 14, the pedestal 15 and the indexing unit 16. In addition, two angularly separated cam wheels 52, 53 are mounted eccentrically on the shaft 20 and arranged to engage respective follower rollers 54, 56 which are journalled for rotation on a cranked member 58.

The cranked member 58 is itself supported for pivotal rocking movement by a horizontal shaft 60 which is journalled in the upstanding arms of a support bracket 62 rigid with the machine frame, and it is to be understood that the cranked member is driven to rock backwards and forwards once per indexing movement of the turret 10. The cam wheels 52, 53 and their associated follower rollers 54, 56 serve for respective ones of the two directions of movement of the cranked member.

A cam wheel 64 (Fig.2) is disposed between the turret 10 and the indexing unit 16, being mounted on a hub 66 concentric with the shaft 12. A tie rod 68 is pivotally attached to the cranked member 58 at one end; at its other end it is pivotally attached to a boss 70 fast with the cam wheel, so that the rocking movements of the cranked member are transmitted to the cam wheel and generate corresponding oscillating movements of the latter about the central axis 14.

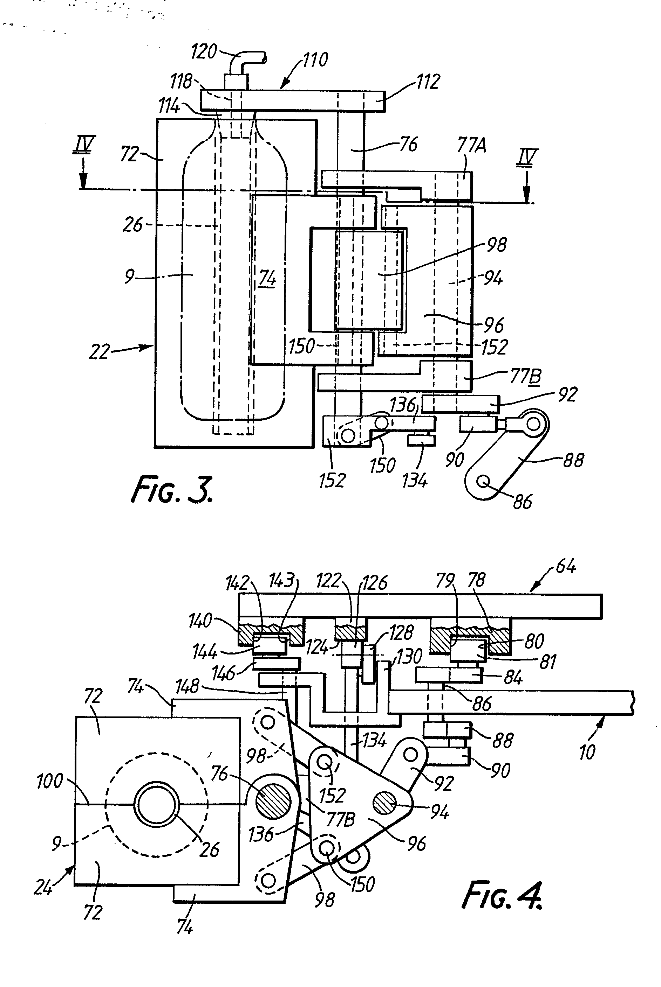

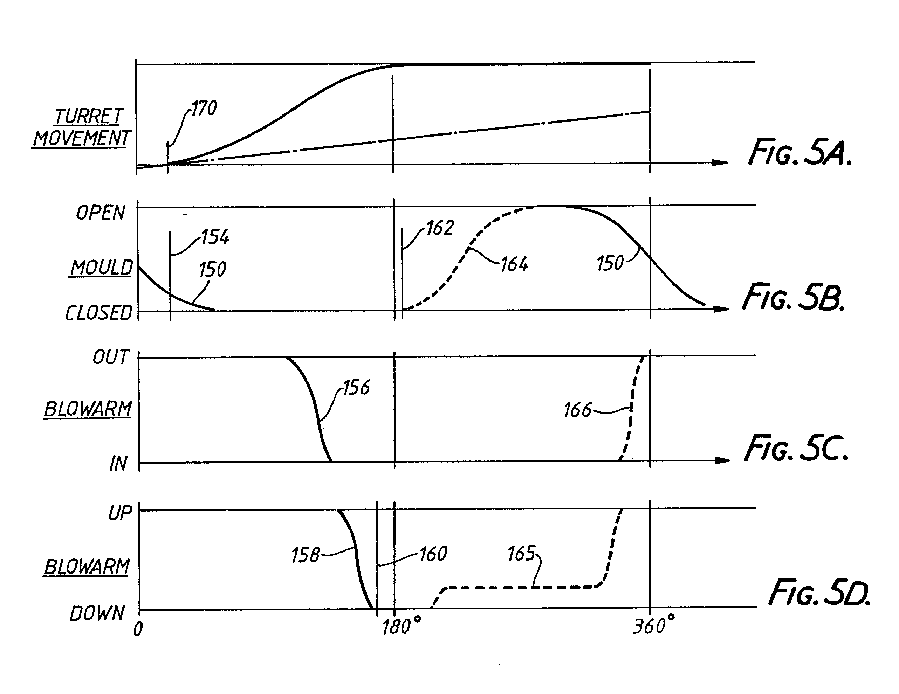

On its front face, that is to say, its face facing the turret 10, the cam wheel 64 is formed with eight identical and regularly spaced sets of three generally concentric cam tracks with which cam follower rollers engage to control the operation of the mould assemblies 22, as is now described with reference to Figs. 3 and 4.

For the purposes of this description figures 3 and 4 show a mould assembly which is accelerating away from the dwell position A in Fig.1, at the time when its associated mould 24 has just closed onto a length 26' of the parison issuing from the die head 44 and the parison length has been severed by the knife 26 (which has subsequently been retracted.) Each mould 24 comprises two mould halves 72 carried by cheek members 74 which are hinged together down one side of the mould by means of a hinge pin 76. The hinge pin is supported from the turret 10 by support members 77A, 77B. Each mould half is formed with one half of the mould cavity 9 which is created when the mould halves are closed together along mould parting line 100.

The mould cavity 9 is shaped to form a plastics article; in the drawing this is shown as being a bottle for packaging a food or beverage product, the mould parting line 100 extending centrally of the bottle from the bottle neck at its trailing end (in relation to the turret 10 rotation) to the bottle base at its leading end.

The hinge pin 76 lies on a transverse plane which is orthogonal to the rotational axis 14 of the turret; it is vertical when the mould assembly is in the dwell position A as shown. The mould halves 72 are disposed for movement symmetrically in relation to this transverse plane, on the side of the hinge pin remote from the axis 14.

Opening and closing movement of the mould halves is controlled from the radially innermost of the three cam tracks of the set which at the time in question is operative for that particular mould. This cam track is shown and indicated by the reference numeral 78 in Fig.4, and provides opposed and radially facing outer and inner cam faces 79, so for engagement by a cam follower roller 81.

The follower roller 81 is rotatably mounted on a stub axle carried on one end of a crank arm 84. The other end of this crank arm is fast with a spindle 86 which extends through, and is rotatably supported by, the turret 10.

On the other side of the turret 10 from the cam wheel 64 the spindle 86 is fast with one end of a further crank arm 88 (Fig.3). The other end of this crank arm is pivotally connected by a connecting rod 90 to a third crank arm 92.

The crank arm 92 is fast with the lower end (as seen in Fig.3) of a shaft 94 which is rotatably supported from the turret 10 by the support members 77A, 77B, so as to lie in parallel relation to, and on the same transverse plane as, the hinge pin 76. It will therefore be understood that translational movements of the roller follower 80 generated by the cam faces 79, 80 will be transmitted to the shaft 94 so as to cause corresponding rotational movements of that shaft.

A yoke member 96 fast with the shaft 94 is centred on the common transverse plane of the hinge pin 76 and shaft 94 when, as shown, the mould halves 72 are closed together to define the mould cavity 9. The yoke member is attached to each of the cheek members 74 by a respective pair of links 98 each of which is pivotally attached by pins 150, 152 respectively to the cheek member at one end and to the yoke member at its other end.

As is shown in Fig.4, when the mould 24 is closed the rotational axes at the ends of the links 98 lie on a common plane with the rotational axis of the shaft 94. The links are therefore in top dead centre positions and so hold the mould halves closed against the substantial separation forces which are exerted on the mould when the parison 26 within the mould cavity 9 is being inflated. It will be understood, however, that when it is later required to eject the moulded article, a rotational movement of the yoke member 96 from its central position caused by rotation of the shaft 94 will unlock the mould and cause the links to swing the mould halves apart by rotation about the hinge pin 76.

In addition to the mould 24 and its associated operating linkage, each mould assembly 22 includes a blow pin assembly 110 (Figs. 3 and 4) of which the hinge pin 76 previously described forms part.

As can clearly be seen in Fig.3, the hinge pin is extended beyond the support members 77A, 77B at its top and bottom ends. At its top end it carries a cross arm 112 on the free end of which is mounted a tapered blow pin 114 capable of entering the open top end of the length of parison 26 after its severance from the die head 44 and when supported in the mould 24 leaving dwell position A. In known manner the blow pin is capable of making a gas-tight connection with the bore of the parison after insertion; in addition, during the insertion it compression forms the parison material against the cavity wall at the top of the mould cavity so as to provide good definition for any features of the moulded article (e.g. screw threads) in that locality.

For inflating the parison against the mould cavity 9 in the formation of the moulded article, the blow pin has a central gas passage 118, and a flexible conduit 120 by which pressurised gas (e.g. air) may be supplied to the gas passage at the appropriate time.

For controlling the movement of the blow pin in relation to the mould assembly 24, the hinge pin 76 is movable both rotationally and longitudinally. The rotational movement is controlled from the centre one 122 of the three cam tracks of the operative set on the cam wheel 64. This cam track 122 has a generally annular cam surface 124 facing axially of the machine towards the turret 10. A cam follower roller 126 is mounted for engagement with the cam surface by a lever arm 128, which is itself pivotally mounted for movement about a transversely directed axis on a carrier piece 130 of which one is provided for each mould assembly. The carrier piece 130 is rigidly mounted on the turret 10. A spring not shown) biasses the follower roller 126 against the cam face 124.

A tie rod 134 movably attaches the lever arm 128 to a crank arm 136 fast with the bottom end of the hinge pin 76, and it will therefore be understood that, as the turret 10 and cam wheel 64 rotate in relation to one another, the cam face 124 will generate translational movements of the follower roller 126 generally parallel to the common rotational axis 14 of the turret and cam wheel, and these movements will be transmitted by the lever arm 128, tie rod 134 and crank arm 136 to cause corresponding rotational movements of the hinge pin 76.

The longitudinal movement of the hinge pin 76 required to position the blow pin 114 is controlled from the radially outermost one 140 of the three cam tracks of the associated set. This cam track has opposed and radially facing outer and inner cam faces 142,143 against which a cam follower roller 144 may engage. The follower roller 144 is rotatably mounted on a crank arm 146 which is itself mounted at the end of a spindle 148. The spindle 148 is journalled in the carrier piece 130, and at its other end is linked by further crank arm 150 to a connection block 152 on the bottom end of the hinge pin 76. The crank arm 150 and connection block 152 are connected pivotally so that the radially directed translational movements of the follower roller 144 generated by the cam faces 142, 143 will be transmitted via the items 146, 148, 150 and 152 to cause corresponding longitudinal movements of the hinge pin. A suitable lost motion (not shown) is provided to allow the longitudinal movement of the hinge pin to occur independantly of the rotational movement of the hinge pin caused by the crank arm 136 as described above, and likewise to allow rotational movement of the hinge pin to occur independantly of any longitudinal movement.

In operation of the apparatus the eight mould assemblies 22 are moved intermittently between the eight stations A to H by successive angular movements of 45° each of the turret 10,and for each indexing movement and the succeeding dwell period the cam wheel 64 makes one back and forth oscillation , conveniently through 45° of angle. Broadly, the cam wheel moves forward (i.e. in an anticlockwise direction as shown in Fig.1) with the turret during each indexing movement of the latter, returning to its original position over the duration of the succeeding dwell period. In this way relative movement is made always available between the cam faces 79, 80, 124, 142 and 143 and their respective follower rollers 81, 126 and 144, even when the turret is stationary.

Fig.5 shows diagrams of various operations of the apparatus during one indexing movement of the turret 10, the angular position of the input shaft 20 to the indexing unit 16 being given as the common ordinate. In Fig.5A the movement of the turret during each indexing motion is shown, indicating that the turret rotates through 180° of the shaft 20 rotation, and then dwells for the remaining 180° of the rotation. Also represented in Fig.5A, to the same vertical scale and in broken line, is the movement of the parison as it is extruded at constant speed by the extrusion head 44.

Fig.5B is a composite curve of the opening and closing operation of the moulds 24 under the control of the cam track 78. It will be seen from the two parts of curve 150 that each mould begins to close onto the parison when it is positioned in dwell position A, the completion of the mould closure operation occurring when the mould subsequently accelerates away from position A during the next indexing movement of the turret.

As soon as the mould has come into contact with the free length of parison 26' which is suspended from the extrusion head 44, the knife 46 is actuated to sever the parison length from the parent tube, as indicated by the line 154. The severed parison length is then held by the mould while mould closing is completed and during the subsequent blow moulding operation.

Curve 156 in Fig.5C indicates the rotational movement of the blow arm 110 associated with the mould in question, by which the blow pin 112 is positioned over the mould cavity. This rotational movement occurs, under the control of the cam track 122, after the parison length 26' has been severed and the mould has subsequently moved away from the leading end of the parent parison sufficiently to allow the blow arm to be inserted. The blow arm is then lowered into sealing engagement with the cut end of the parison length as is represented by the curve 158 in Fig.5D, after which pressurised air is admitted through the blow pin 114 via conduit 120 (Fig.3) to inflate the parison length into intimate contact with the mould cavity 9. Line 160 indicates when the blow air is applied, line 162 indicating the angular position of the shaft 20 when the mould subsequently reaches, and halts at, dwell position H and the blow air supply to the conduit 120 is disconnected.

After the blow air has been stopped at position H, the mould is opened (curve 164) and the moulded article removed by a suitable mechanism (not shown). The associated blow arm 110 is then raised (curve 165) and swivelled out of the way (curve 166). As can be seen from curve 165, in order to ensure that the article can be properly detached from the mould for ejection, the blow pin is raised through a small distance at the beginning of the mould opening movement, lifting the article with it; if desired, a small subatmospheric pressure can be applied to the interior of the bottle via the conduit 120 to ensure continued attachment of the bottle to the blow pin during this time. The now empty and open mould thereafter moves towards the dwell position A, its mould halves 72 passing one on either side of the extrusion head 44 and halting, at dwell position A, immediately after they have passed it. The mould is then closed onto the parison beneath the extrusion head, the enclosed parison length is severed, and the sequence continues. The closing of each mould onto the parison being extruded by the head 44 is a particularly significant part of the blow-moulding cycle. The mould begins to close as the end of its dwell period in position A is approaching (curve 150). Closing continues while the turret begins its next indexing movement, but contact with the parison is delayed (by suitable arrangement of the cam track 78) until the mould has accelerated to the extrusion speed of the parison, at which time the mould-to-parison contact can occur with substantially no disturbance of the parison. This instant in time is represented in Fig.5A by the line 170. Substantially at the same time, and as soon as the mould has engaged the parison sufficiently firmly to allow it, the knife 46 is operated to sever the enclosed parison length from the parent tube (line 154), so allowing the mould to accelerate the parison length away from the cut end of the parent tube and eventually enabling the blow arm 112 to be inserted between them. The mould continues its closing movement for a short time after severance, thereby pinching the bottom end of the parison length closed in anticipation of the blow moulding operation.

Whilst in the described embodiment cams are used to achieve not only the opening and closing of the moulds but also the required movement of the blow arms, one or both of these functions may be achieved by other means, for example pneumatic actuators under microprocessor control.

## Claims

1. A rotary blow moulding apparatus, which comprises a spatially fixed die and extrusion system arranged to extrude a free hanging parison, in combination with a rotary turret which is arranged for intermittent rotation about a horizontal axis, the turret carrying mould assemblies which are controlled and effective in succession to collect successive portions of the parison, the apparatus having severance means arranged for severing the said successive portions of parison on collection, and the turret being thereafter effective to accelerate the moulds with the parison portions therein away from the parent parison so as to create a gap behind each parison portion, and hold them for their inflation by blow arms introduced into the respective gaps and effective on their trailing ends.

2. Apparatus according to claim 1, which includes a cam assembly arranged to oscillate generally in synchronism with the indexing movements of the mould assemblies and the dwell periods between them, in such a way that relative movement always exists between the cam assembly and the rotary turret.

3. Apparatus according to claim 1 or claim 2, wherein the severance means is effective on the parison at a time when the mould assembly is accelerating and its speed is substantially the same as the extrusion speed of the parison.

4. A method of blow moulding thermoplastics articles, which comprises:

extruding a free-hanging thermoplastics parison in a vertically downward direction;

intermittently rotating a plurality of moulds in a circular, vertically oriented path about a horizontal axis of rotation, the vertically oriented path lying adjacent to the thermoplastic parison, and movement of the moulds in the path presenting each mould in turn to the parison in a downward direction;

at a time when the mould is accelerating downwardly and the speeds of the parison and mould have become sustantially equal,

closing each so-presented mould onto the parison, and

severing from the parent parison the parison length thereby held in the mould; and

after the mould has accelerated away from the parent parison to create a gap between the parison length and the parent parison,

moving the respective blow arm into the gap and engaging it with the trailing end of the parison length to effect blow moulding.

5. A rotary blow moulding apparatus, substantially as hereinbefore described with reference to the accompanying drawings.

6. A method of rotary blow moulding thermoplastics articles, substantially as hereinbefore described with reference to the accompanying drawings.

Fig. I.

EP 0 371 175 A1

FIG. 2.

FIG. 3.

FIG. 4.

EP 0 371 175 A1

TURRET
MOVEMENT

170

*FIG. 5A.*

OPEN

MOULD

154
150

162
164
150

CLOSED

*FIG. 5B.*

OUT

BLOWARM

156

166

IN

*FIG. 5C.*

UP

BLOWARM

158
160
165

DOWN

0          180°          360°

*FIG. 5D.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 203 239 (INCOPLAN) <br> * Page 5, lines 1-14; page 21, lines 6-9; page 24, line 26 - page 26, line 13; claims; figures * | 1-6 | B 29 C 49/36 <br> B 29 C 49/04 |
| X | DE-A-2 217 671 (INCOPLAN) <br> * Claims; figures * | 1-6 | |
| A | US-A-3 365 748 (G. COTE) <br> * Claim 1; figures * | 1 | |
| A | FR-A-2 306 820 (A. DI SETTEMBRINI) <br> * Page 3, line 25 - page 4, line 40; figures * | | |
| A | GB-A- 944 615 (BARAND LTD) | | |
| A | US-A-3 310 834 (J. SIMPSON et al.) | | |
| A | FR-A-2 235 788 (SOLVAY & CIE) | | |
| A | FR-A-2 248 919 (MONSANTO) | | TECHNICAL FIELDS SEARCHED (Int. Cl.5) |
| A | US-A-3 632 249 (W.S. PEARSON) | | B 29 C |

The present search report has been drawn up for all claims

| Place of search | Date of completion of the search | Examiner |
|---|---|---|
| THE HAGUE | 31-07-1989 | SZAMOCKI G.J.A. |

EPO FORM 1503 03.82 (P0401)